# FASCICULE DE BREVET EUROPEEN

(11) **EP 2 136 359 B1**
(45) Date de publication et mention de la délivrance du brevet: **17.08.2011**
(21) Numéro de dépôt: 09162126.8
(22) Date de dépôt: 05.06.2009
(51) Int. Cl.: G10L 15/00

(54) **Procédé et appareil de mesure de l'intelligibilité d'un dispositif de diffusion sonore**
Verfahren und Gerät zur Messung der Verständlichkeit einer Vorrichtung zur Schallausstrahlung
Method and device for measuring the intelligibility of a sound distribution system

(30) Priorité: 19.06.2008 FR 0803435
(43) Date de publication de la demande: 23.12.2009
(73) Titulaire: Archean Technologies (Société par actions simplifiée), 82000 Montauban (FR); Wilhelm-Jauréguiberry, Antoine, 31490 Leguevin (FR)
(72) Inventeur: Wilhelm-Jauréguiberry, Antoine, 31490, LEGUEVIN (FR); Aumont, Xavier, 82000, MONTAUBAN (FR)
(74) Mandataire: Cabinet BARRE LAFORGUE & associés

(56) Documents cités:
- DE-A1- 3 708 002
- US-A1- 2004 158 431
- US-B1- 6 275 797

## Description

L'invention concerne un procédé de mesure du niveau d'intelligibilité d'un dispositif de diffusion sonore, un appareil de mesure de ce niveau d'intelligibilité, ainsi qu'un support d'enregistrement permettant la mise en oeuvre du procédé au moyen d'un dispositif informatique tel qu'un ordinateur personnel.

Il est courant d'utiliser des dispositifs de diffusion sonore pour diffuser un message vocal d'information ou d'alerte à une ou plusieurs personnes, dans des formes ou des environnements très variés. On peut citer par exemple les dispositifs de sonorisation de bâtiments ou ceux rencontrés dans les moyens de transport (avion, train...) ou encore ceux utilisés en plein air lors de foires ou autres manifestations équivalentes. On entend cependant aussi par dispositif de diffusion sonore d'autres dispositifs utilisant des transducteurs électroacoustiques pour transmettre un message vocal tels que des téléphones ou assimilés, des appareils d'aide auditive ou encore des appareils de guidage vocal.

Il est nécessaire, pour s'assurer de l'adéquation du dispositif à sa mission, de vérifier si un message diffusé par le dispositif est intelligible, c'est-à-dire apte à être compris, dans de nombreuses conditions d'écoute et des environnements de service très divers du dispositif, comme par exemple le bruit ambiant, les réverbérations sonores, etc.

Il existe deux types de méthodes pour évaluer le niveau d'intelligibilité d'un dispositif de diffusion sonore :
- les méthodes dites objectives telles celles décrites dans le document US 2005/0135637 qui utilisent des procédés normalisés dans lesquels un signal sonore de référence (par exemple bruit blanc ou bruit rose) est modulé en amplitude à différents taux et fréquences de modulation, ce signal est diffusé par au moins un haut-parleur du dispositif de diffusion sonore à mesurer puis capturé capturé par un microphone et analysé en comparant par exemple la profondeur de modulation dans les différentes bandes de fréquence entre le signal d'origine et le signal diffusé et capturé. Ces méthodes, si elles offrent l'avantage de donner des mesures reproductibles n'utilisent pas de messages ayant un contenu verbal et ne sont qu'une approximation du but recherché d'évaluer l'aptitude à être compris du message diffusé.
- les méthodes dites subjectives visent à pallier cet inconvénient en faisant appel à un panel d'auditeurs qui doivent évaluer l'intelligibilité du dispositif telle qu'ils la perçoivent. Pour ce faire, des méthodes normalisées prévoient des listes de mots (méthode de décompte de mots phonétiquement équilibrés) ou des textes (méthode d'essai de rime modifiée) qui sont diffusées par le dispositif à mesurer à destination du panel d'auditeurs. Cependant, pour éviter trop de subjectivité dans ces jugements, il convient d'effectuer de multiples essais, en alternant les auditeurs et les messages diffusés ce qui rend la mesure longue et coûteuse pour un résultat dont la reproductibilité peut être sujette à caution.

On connaît également des documents DE 37 08 002, US 6,275,797 et US 2004/0158431 des procédés de test respectivement d'encodeurs vocaux, de lignes de communication ou d'appareil auditif dans lesquels un signal vocal est transmis par une première voie perturbée puis traité par un dispositif de reconnaissance vocale pour être comparé, sous forme de texte, au même signal non perturbé traité par un dispositif de reconnaissance vocale analogue ou identique.

La présente invention a donc pour but de proposer un procédé et un appareil de mesure du niveau d'intelligibilité d'un dispositif de diffusion sonore qui ne présentent pas les inconvénients de la technique antérieure et permettent d'obtenir une mesure rapide, reproductible et représentative de l'aptitude à être compris d'un message verbal diffusé.

Pour ce faire, l'invention concerne un procédé de mesure du niveau d'intelligibilité d'un dispositif de diffusion sonore comportant les étapes suivantes :
- définition d'un contenu verbal d'un message vocal, dit contenu verbal d'origine,
- élaboration d'un message sonore, dit message sonore d'origine, à partir dudit contenu verbal d'origine,
- diffusion dudit message sonore d'origine par le dispositif de diffusion sonore,
- capture en sortie du dispositif de diffusion d'un message sonore diffusé,
- transmission dudit message sonore diffusé à un module de reconnaissance vocale adapté pour restituer un contenu verbal du message sonore diffusé,
- analyse du contenu verbal du message sonore diffusé restitué par le module de reconnaissance vocale par comparaison de celui-ci avec le contenu verbal d'origine et,
- calcul d'une mesure du niveau d'intelligibilité du dispositif de diffusion sonore à partir de cette analyse.

Selon le procédé de mesure de l'invention, des marqueurs de synchronisation sont insérés dans le message sonore d'origine, en des emplacements prédéfinis du contenu verbal d'origine et la reconnaissance vocale est asservie en fonction de la position desdits marqueurs de synchronisation dans le message sonore diffusé. Le contenu verbal du message diffusé peut être ainsi synchronisé avec le contenu verbal d'origine et la comparaison des deux peut être effectuée « mot à mot », rendant ainsi l'étape de comparaison plus rapide et plus précise.

Selon une caractéristique avantageuse de l'invention, le message d'origine est un message prédéterminé et le module de reconnaissance vocale est adapté par adjonction de données d'apprentissage relatives audit message d'origine.

Dans un autre mode d'exécution du procédé de mesure selon l'invention, à l'issue de l'étape d'élaboration, le message d'origine est transmis à un second module de reconnaissance vocale et l'analyse du contenu verbal du message diffusé restitué par le premier module de reconnaissance vocale s'effectue par comparaison avec le contenu verbal du message d'origine restitué par le second module de reconnaissance vocale.

Selon une caractéristique avantageuse du procédé de mesure selon l'invention, la mesure du niveau d'intelligibilité est obtenue par une combinaison d'indicateurs pris parmi un taux de reconnaissance, un taux de substitution, un taux de suppression et un taux d'insertion, chaque indicateur étant calculé pour une durée prédéterminée du message d'origine. Plus précisément, la durée prédéterminée correspond à une durée de message comprise entre 30 et 50 secondes.

Selon une autre caractéristique du procédé de mesure de l'invention, particulièrement adapté pour la mise au point de prothèses auditives, on utilise, à titre de dispositif de diffusion sonore, ladite prothèse auditive en série avec un filtre présentant une courbe de réponse en fréquence identique à celle d'une oreille à appareiller et on mesure le niveau d'intelligibilité dudit dispositif. Il est en effet fréquent qu'un patient dont l'oreille doit être appareillée se plaigne d'un manque d'intelligibilité alors même que la prothèse a été réglée pour compenser les défaillances de la courbe de réponse en fréquence de son oreille. Ainsi, en mesurant directement le niveau d'intelligibilité tel qu'il sera perçu par le patient, on peut mettre au point la prothèse pour maximiser ce niveau sans avoir besoin de faire appel au patient.

L'invention propose également un appareil de mesure du niveau d'intelligibilité d'un dispositif de diffusion sonore selon la revendication 7.

Avantageusement et selon l'invention, l'appareil comporte en outre un lecteur de supports d'enregistrement et/ou des moyens de mémoire interne adaptés pour lire et enregistrer des fichiers représentatifs du message sonore d'origine, du contenu verbal dudit message et des données d'apprentissage du module de reconnaissance vocale.

Avantageusement et selon l'invention, l'appareil peut également comporter un module d'élaboration du message sonore d'origine coopérant avec la sortie analogique pour transmettre un message sonore d'origine à destination du dispositif de diffusion sonore, comprenant l'un au moins d'un microphone, d'un lecteur de supports d'enregistrement ou d'un module de synthèse de la parole.

Avantageusement et selon l'invention, l'appareil de mesure comporte un second module de capture et de numérisation ainsi qu'un second module de reconnaissance vocale, adaptés pour coopérer avec la sortie analogique et restituer un contenu verbal restitué du message sonore d'origine. Dans ce cas, le module de calcul est adapté pour comparer ledit contenu verbal restitué du message sonore d'origine et un contenu verbal du message sonore diffusé et calculer une mesure du niveau d'intelligibilité du dispositif de diffusion sonore à partir de ladite comparaison.

L'invention s'étend également à un support d'enregistrement - notamment du type amovible (CD-ROM, DVD, clé USB, carte mémoire...) - pour la mise en oeuvre du procédé de mesure à l'aide d'un dispositif informatique du type ordinateur personnel par exemple. Le support contient au moins un fichier de type sonore représentant le message sonore d'origine, un fichier de type texte associé représentant le contenu verbal du message sonore d'origine et un fichier de données d'apprentissage du module de reconnaissance vocale associées au message sonore d'origine. Ainsi, un ordinateur personnel contenant un programme de reconnaissance vocale approprié peut être simplement programmé pour exécuter le procédé de mesure. Avantageusement, le support d'enregistrement peut contenir également des instructions de programme adaptées pour programmer un module de reconnaissance vocale et exécuter le calcul de la mesure d'intelligibilité.

L'invention concerne également un procédé et un appareil de mesure de l'intelligibilité d'un dispositif de diffusion sonore et un support d'enregistrement caractérisés en combinaison par tout ou partie des caractéristiques mentionnées ci-dessus ou ci-après.

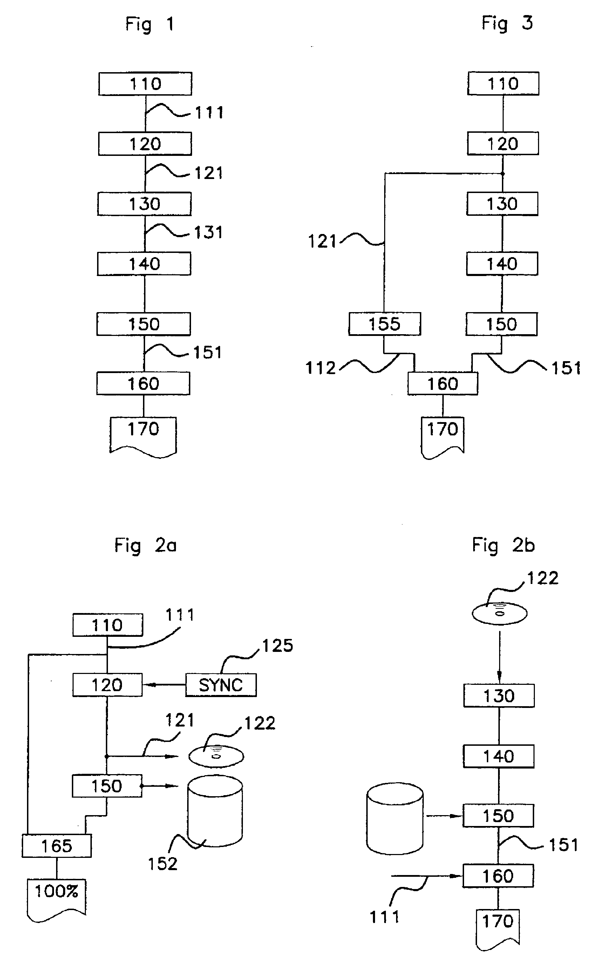

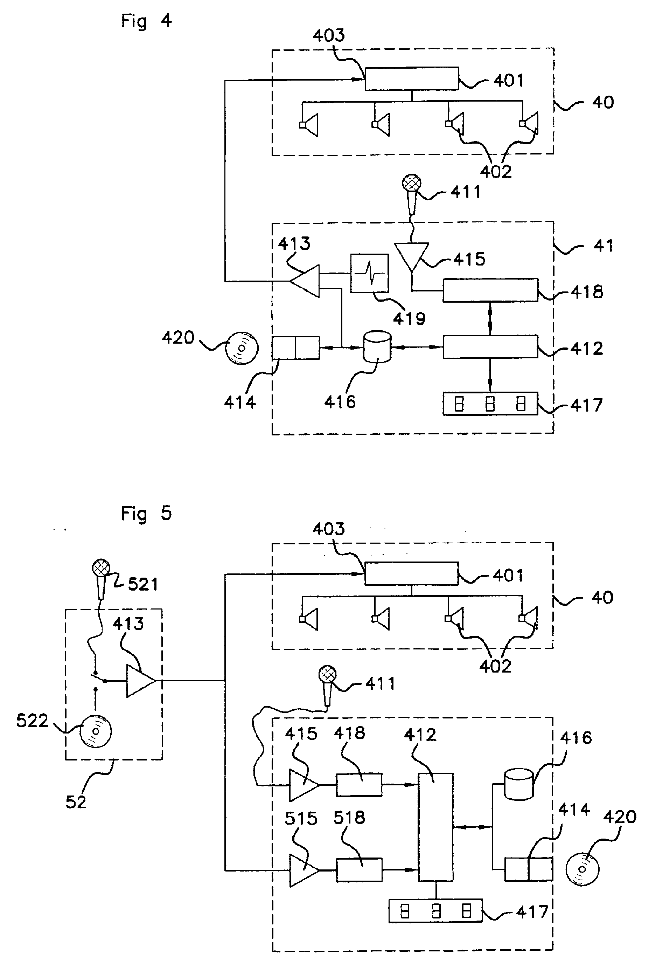

D'autres buts, caractéristiques et avantages de l'invention apparaîtront au vu de la description qui va suivre et des dessins annexés dans lesquels :
■ la figure 1 représente un logigramme schématique des étapes du procédé selon l'invention,
■ les figures 2a et 2b représentent schématiquement deux tronçons complémentaires du procédé selon un deuxième mode d'exécution,
■ la figure 3 représente un logigramme schématique des étapes du procédé selon un troisième mode d'exécution,
■ la figure 4 représente schématiquement un appareil de mesure selon l'invention adapté pour la mise en oeuvre du procédé selon son premier ou deuxième mode d'exécution, et
■ la figure 5 représente schématiquement un appareil de mesure selon l'invention adapté pour la mise en oeuvre du procédé selon son troisième mode d'exécution.

La figure 1 représente en 110 une étape de définition d'un contenu verbal d'un message à diffuser, dit contenu verbal d'origine 111. Cette définition peut être faite en se servant des différentes nonnes existantes pour le choix de mots (par exemple selon la méthode de décompte de mots phonétiquement équilibrés) ou de phrases (par exemple selon la méthode d'essai de rimes modifiées) particuliers, ou encore être basée sur des messages types qui sont ou seront diffusés par un dispositif de diffusion sonore 40 (figure 4) dont l'intelligibilité est à évaluer. Cette étape de définition n'est pas nécessairement effectuée à chaque fois que le procédé est mis en oeuvre. En effet, il peut être suffisant de définir une fois pour toutes une série de contenus couvrant l'essentiel des besoins et de les normaliser.

Le contenu verbal d'origine 111 est ensuite transmis à une étape d'élaboration 120 d'un message sonore qui servira de message sonore d'origine 121 pour tester le dispositif de diffusion sonore 40. Cette étape 120 peut, comme la précédente, ne pas être complètement effectuée à chaque exécution du procédé. Par exemple, un contenu verbal d'origine 111 normalisé pourra être lu à haute voix par un orateur et être enregistré sur un support d'enregistrement 122 (figure 2a) sous la forme d'un fichier sonore analogique ou numérique. Dans ce cas, seule la relecture du fichier sonore sera nécessaire à chaque exécution. Dans une autre variante, l'étape 120 pourra être effectuée à chaque fois par transmission d'un fichier texte représentant le contenu verbal d'origine 111 à un module de synthèse vocale qui élaborera le message sonore à partir de ce fichier.

Le message sonore d'origine 121 est alors transmis à l'étape 130 dans laquelle il est envoyé au dispositif de diffusion sonore 40 pour être diffusé par exemple dans une salle de conférence dans laquelle on veut mesurer le dispositif de diffusion sonore. Il est important de noter qu'on doit comprendre dans la suite de la description le terme de diffusion sonore comme couvrant à la fois le dispositif qui va générer les ondes sonores au moyen de transducteurs électromécaniques comme des haut-parleurs par exemple, mais également l'environnement du dispositif qui peut comprendre une salle avec ses conditions éventuellement changeantes d'écho, de réverbération et/ou d'atténuation, ou bien des conditions de plein air soumises à des variations de vent, etc.

Le message sonore diffusé 131 peut être ainsi déformé par rapport au message sonore d'origine 121 tant à cause des caractéristiques intrinsèques du dispositif de diffusion sonore 40 que par les conditions d'environnement qui prévalent lors de cette diffusion.

Le message sonore diffusé 131 est alors capturé dans l'étape 140, par exemple au moyen d'un microphone 411 (figure 4) associé à un module de capture et de numérisation comme par exemple un convertisseur analogique-numérique équipant une carte d'acquisition sonore et transformé en un fichier sonore numérisé représentant aussi fidèlement que possible le message sonore diffusé.

Lors de l'étape 150, le message sonore diffusé est alors transmis (sous cette forme) à un module de reconnaissance vocale. De tels modules sont bien connus de l'homme du métier, comme celui proposé par la société italienne LOQUENDO.

Un module de reconnaissance vocale a pour fonction principale de restituer un contenu verbal correspondant à un message sonore, en général sous la forme d'un fichier texte comportant une liste de mots reconnus par le module de reconnaissance vocale, ainsi que, pour chaque mot, une série d'informations complémentaires telles qu'une datation de l'instant auquel le mot a été reconnu et une estimation de la probabilité pour que le mot reconnu concorde en réalité à la portion du message sonore correspondante.

A l'étape 150, le message sonore diffusé 131 est analysé par le module de reconnaissance verbale qui délivre un contenu verbal restitué 151 du message sonore diffusé. Ce contenu verbal restitué 151 est alors transmis à l'étape 160 dans laquelle il est analysé pour en tirer une mesure du niveau d'intelligibilité 170 du dispositif de diffusion sonore 40.

L'analyse effectuée à l'étape 160 peut être de deux types, intrinsèque ou comparative.

Dans un premier mode d'exécution du procédé de mesure, l'estimation de probabilité fournie par le module de reconnaissance vocale pour chaque mot est employée pour tirer par combinaison des probabilités un indicateur de pertinence représentatif de la probabilité que le message sonore diffusé 131 ait été « perçu » de manière cohérente par le module de reconnaissance vocale. En effet, lorsqu'un mot du message sonore d'origine 121 est déformé par le dispositif de diffusion sonore et se retrouve ainsi dans le message sonore diffusé 131, plusieurs cas peuvent se produire :
■ le mot n'a pas été reconnu par le module de reconnaissance vocale, aucun mot n'est donc proposé dans le contenu verbal restitué 151 ou plus exactement une suite de symboles convenus signale cette absence de reconnaissance et l'estimation de probabilité pour ce mot est nulle.
■ plusieurs mots candidats peuvent correspondre à la portion du message sonore diffusé considérée. Le module de reconnaissance vocale propose alors celui dont la probabilité est la plus forte. L'écart entre cette probabilité et la valeur 1 correspond au risque que pourrait avoir un auditeur de prendre un mot pour un autre.
■ enfin, le mot peut avoir été correctement reconnu par le module de reconnaissance vocale et sa probabilité de correspondre à la portion du message sonore diffusé considérée est proche de 1.

Ainsi en combinant les estimations de probabilité de chaque mot, par exemple en effectuant leur moyenne pour produire une probabilité résultante, on obtient un indicateur de pertinence qui est d'autant plus proche de la valeur 1 que les mots constituant le message sonore diffusé 131 ont été bien « compris » par le module de reconnaissance vocale. Il suffit de comparer alors cet indicateur de pertinence avec une table de référence pour en tirer une mesure du niveau d'intelligibilité du dispositif de diffusion sonore 40.

Avantageusement, le calcul de cet indicateur de pertinence est effectué pour des fractions significatives du contenu verbal restitué 151 du message sonore diffusé pour prendre en compte un nombre de mots minimum. Il est ainsi préférable de prendre en compte un nombre de mots correspondant à une durée de message comprise entre 30 secondes et une minute, et plus particulièrement de relever les valeurs de l'indicateur de pertinence pour les durées de 30 et 50 secondes.

Afin d'améliorer le procédé de mesure décrit ci-dessus, il est souvent utile de fournir des données supplémentaires au module de reconnaissance vocale. A titre d'exemple, on peut citer la fourniture d'un dictionnaire des mots possibles ou encore des données d'apprentissage, générées par le module de reconnaissance vocale lui-même, à la suite de nombreux essais de reconnaissance vocale.

Par exemple, lorsque le contenu verbal d'origine correspond à une liste de mots établie selon la nonne applicable à la méthode de décompte des mots phonétiquement équilibrés, il est pratique de limiter le dictionnaire utilisable par le module de reconnaissance vocale à cette liste de mots. On obtient ainsi une reconnaissance plus rapide et plus précise.

On va illustrer l'utilisation de données d'apprentissage en relation avec un deuxième mode d'exécution du procédé selon l'invention, mode dans lequel la mesure d'intelligibilité repose sur la comparaison entre le contenu verbal du message diffusé restitué par le module de reconnaissance vocale et le contenu verbal d'origine.

On a illustré sur la figure 2a un premier tronçon du procédé permettant la génération de ces données d'apprentissage.

A l'étape 110, un contenu verbal d'origine 111 prédéterminé est choisi et à l'étape 120, le message sonore d'origine 121 correspondant est enregistré sur un support 122 puis transmis directement à l'étape 150 de reconnaissance vocale sans être « déformé » par l'étape de diffusion. Le contenu verbal restitué du message sonore d'origine est alors transmis à une étape d'analyse 165 qui peut être une analyse intrinsèque de même type que l'étape 160 vue précédemment ou bien, comme on le verra de manière plus détaillée par la suite, une analyse par comparaison avec le contenu verbal d'origine 111 issu de l'étape 110. On répète ces opérations jusqu'à ce que la reconnaissance vocale du message sonore d'origine 121 soit complète ce qui est symbolisé par un résultat de 100%. A ce moment, le module de reconnaissance vocale de l'étape 150 a généré des données d'apprentissage 152 qui sont propres à assurer que si le message sonore diffusé 131 n'était pas déformé par le dispositif de diffusion sonore 40, la mesure du niveau d'intelligibilité donnerait un résultat optimum.

Dans un deuxième tronçon du procédé illustré à la figure 2b, le message sonore d'origine 121 issu par exemple du support d'enregistrement 122 est diffusé à l'étape 130, le message sonore diffusé 131 est capturé à l'étape 140 et transmis à l'étape de reconnaissance vocale 150. Le module de reconnaissance vocale reçoit les données d'apprentissage 152 issues du tronçon précédent. Ainsi l'étape 150 est améliorée et le contenu verbal restitué 151 du message sonore diffusé 131 peut être analysé plus finement à l'étape 160.

Selon le deuxième mode d'exécution du procédé de mesure de l'invention, on introduit dans cette étape 160, à titre de référence, le contenu verbal d'origine 111 défini à l'étape 110, comme l'indique la flèche sur la figure 2b. De ce fait, l'analyse faite n'est plus seulement intrinsèque comme vu précédemment mais peut être également menée de façon comparative entre la référence (contenu verbal d'origine 111) et le contenu verbal restitué 151 à partir du message sonore diffusé 131.

On peut alors définir et utiliser d'autres indicateurs permettant d'évaluer la correspondance entre les deux contenus verbaux :
■ le taux de reconnaissance est défini comme le nombre de mots correctement reconnus par rapport au nombre de mots total,
■ le taux de substitution est défini comme le nombre de mots substitués (erronés) par rapport au nombre de mots total,
■ le taux de suppression est défini comme le nombre de mots supprimés (manquants) par rapport au nombre de mots total,
■ le taux d'insertion est défini comme le nombre de mots insérés à tort par rapport au nombre de mots total,
■ le taux d'erreur est défini comme le nombre d'erreurs de toute nature par rapport au nombre de mots total. On comprendra que le taux d'erreur est égal à la somme des taux de substitution, de suppression et d'insertion.
■ le taux d'exactitude est défini comme le taux de reconnaissance auquel on retranche le taux d'insertion.

Là encore, pour des raisons de standardisation et de reproductibilité de la mesure, on préférera définir ces indicateurs pour une durée de message prédéterminée, par exemple comprise entre 30 secondes et une minute et plus particulièrement pour des durées de 30 et 50 secondes.

La mesure d'intelligibilité 170 du dispositif de diffusion sonore 40, résultat de l'analyse de l'étape 160 est alors calculée en opérant une sélection ou une combinaison des indicateurs précédents, au moyen par exemple d'une combinaison linéaire, d'une moyenne quadratique ou de tout autre type de composition applicable.

Ce mode d'analyse par comparaison entre le contenu verbal 151 du message diffusé restitué par le module de reconnaissance vocale et le contenu verbal d'origine 111 utilisé à l'étape 160 peut s'appliquer quel que soit le contenu verbal d'origine, qu'il soit constitué d'une liste de mots ou de phrases.

On peut encore améliorer ce deuxième mode d'exécution du procédé en synchronisant le contenu verbal 151 du message diffusé restitué par le module de reconnaissance vocale et le contenu verbal d'origine 111.

Pour ce faire, à l'étape 120, des marqueurs de synchronisation 125 sont insérés dans le message sonore d'origine 121, en des emplacements prédéfinis du contenu verbal d'origine 111. Par exemple, le marqueur de synchronisation 125 peut être un signal sonore tel qu'un « bip » simple entre chaque mot d'une liste de mots ou entre chaque phrase dans la méthode des rimes modifiées. Le marqueur de synchronisation peut également être plus complexe, par exemple en modulant la fréquence ou l'amplitude d'une tonalité pour former un « bip » long porteur d'une information plus riche, comme un numéro de rang de la phrase ou du mot suivant. Le marqueur de synchronisation 125 sera adapté pour ne pas être déformé au point de ne pas être reconnaissable lors de la diffusion du message d'origine, à l'étape 130, par exemple en choisissant une tonalité de fréquence facilement détectable et généralement bien retransmise par les dispositifs de diffusion, par exemple une tonalité de 2500 Hz.

La reconnaissance vocale de l'étape 150 et/ou l'analyse de l'étape 160 est asservie en fonction de la position des marqueurs de synchronisation 125 dans le message sonore diffusé 131. Le contenu verbal du message diffusé 151 peut être ainsi synchronisé avec le contenu verbal d'origine 111 et la comparaison des deux peut être effectuée « mot à mot », rendant ainsi l'étape de comparaison plus rapide et plus précise.

Par exemple, le mot de n^{ième} rang, tel que défini par le marqueur de synchronisation, issu du module de reconnaissance vocale de l'étape 150 est comparé avec le mot de même rang dans le contenu verbal d'origine 111. Si les deux mots sont identiques, un compteur est incrémenté. Le rapport de la valeur de ce compteur au nombre de mots du contenu verbal d'origine, pour une durée prédéterminée, est une mesure possible du niveau d'intelligibilité du dispositif de diffusion. Le module de reconnaissance vocale n'ayant pas à analyser et comparer le fragment sonore reçu avec l'ensemble de son dictionnaire, mais seulement avec le mot candidat identifié par le marqueur de synchronisation, peut exécuter sa tâche de manière plus précise et plus rapide.

On se réfère maintenant à la figure 3 pour décrire un mode d'exécution préférentiel du procédé, sous la forme d'un troisième mode d'exécution.

Les étapes 110 à 150 sont identiques aux étapes de même référence décrites précédemment. Cependant, à l'issue de l'étape 120 d'élaboration du message sonore d'origine 121, celui-ci est transmis à une nouvelle étape 155 de reconnaissance vocale, identique dans son fonctionnement à l'étape 150. Le module de reconnaissance vocale de l'étape 155 restitue alors un contenu verbal restitué 112 du message sonore d'origine 121. Ce contenu est alors comparé à l'étape 160 avec le contenu verbal restitué 151 du message sonore diffusé 131 pour en tirer les indicateurs décrits plus haut. Une mesure du niveau d'intelligibilité du dispositif de diffusion sonore 40 est alors calculée en réalisant une sélection ou une combinaison de ces indicateurs.

Dans ce mode d'exécution préférentiel, il n'est plus nécessaire d'imposer une contrainte sur le contenu verbal d'origine 111 du message sonore d'origine. En effet, quel que soit ce contenu, il sera restitué par le module de reconnaissance vocale de l'étape 155 pour être comparé avec le contenu verbal restitué 151 du message sonore diffusé 131.

Les étapes 150 et 155 peuvent avantageusement se dérouler de manière synchrone et la comparaison de l'étape 160 s'effectuer en temps réel. Dès lors, en présence d'un message sonore d'origine 121 en flux continu, diffusé par le dispositif de diffusion sonore 40, le niveau d'intelligibilité pourra être mesuré en continu, par exemple en calculant la combinaison des indicateurs sur une période glissante des 30 ou 50 dernières secondes.

Ce mode préférentiel est particulièrement avantageux car il permet de mesurer le niveau d'intelligibilité d'un dispositif de diffusion sonore 40 en présence du public, sans que celui-ci soit gêné par cette opération. En effet, dans les méthodes de la technique antérieure, et particulièrement avec les méthodes dites objectives, la stridence et l'amplitude des signaux sonores utilisés rend malcommode, voire impossible, la mesure en présence de public. Or le public lui-même est une variable à prendre en compte car il influe grandement sur le bruit de fond généré, l'atténuation de certaines fréquences, la modification des réverbérations, par exemple. Une gare ou une station de métro vide ne présente pas les mêmes propriétés acoustiques que le même endroit, bondé, à l'arrivée d'un train...

On peut désormais, grâce au procédé selon l'invention, envisager d'effectuer une mesure du niveau d'intelligibilité du dispositif de diffusion sonore d'une gare à une heure de grande affluence, à l'arrivée d'un train lorsque le bruit ambiant généré vient noyer certaines fréquences ou que la présence du train modifie les conditions d'écho en mesurant en continu le niveau d'intelligibilité d'une émission radiophonique essentiellement verbale ou des messages de service par exemple.

Le procédé de mesure selon l'invention peut être également employé pour la mise au point d'une prothèse auditive. Une telle prothèse est en général réglée par l'acousticien de telle sorte que l'amplification sonore qu'elle procure au patient permette de compenser des anomalies de la courbe de réponse en fréquence de l'oreille de celui-ci, mesurée par le praticien. Cependant, cette correction ne permet pas toujours de satisfaire le patient qui se plaint souvent de problèmes de compréhension. Il s'en suit alors un cycle de mise au point de la prothèse, faisant appel au patient et au praticien, cycle qui peut s'avérer long, coûteux, et désagréable pour le patient. En mettant en série un filtre représentatif des anomalies de la courbe de réponse en fréquence de l'oreille à appareiller et la prothèse et en considérant cet ensemble comme le dispositif de diffusion sonore, il devient alors possible grâce au procédé de l'invention, de mesurer le niveau d'intelligibilité résultant pour le patient.

La figure 4 représente un appareil de mesure 41 du niveau d'intelligibilité selon l'invention en présence d'un dispositif de diffusion sonore 40.

Le dispositif de diffusion sonore 40 comprend par exemple un amplificateur 401 et une pluralité de haut-parleurs 402. L'amplificateur 401 possède une entrée analogique 403 propre à recevoir un signal représentant un message sonore d'origine.

L'appareil de mesure 41 comprend un microphone 411 apte à être placé au voisinage d'un ou plusieurs des haut-parleurs 402, dans une position susceptible d'être occupée par un auditeur. Le microphone 411 est relié à un module de capture et de numérisation 415, par exemple un convertisseur analogique-numérique équipant une carte d'acquisition sonore. Ce module délivre un signal représentatif du message sonore diffusé 131 à un module de reconnaissance vocale 418.

Un lecteur 414 de supports d'enregistrement 420 et/ou des mémoires internes 416 tels que disque dur ou mémoire RAM, ROM, etc., ainsi qu'un calculateur 412 sont prévus pour gérer le fonctionnement de l'appareil et exécuter les calculs nécessaires à la mesure à effectuer. L'appareil comprend également un afficheur 417 propre à afficher les résultats de la mesure.

Avantageusement, on peut ainsi réunir sur un seul support d'enregistrement 420, par exemple un disque optique ou CD-ROM ou encore une carte mémoire, l'ensemble des fichiers d'instructions et de données permettant la mise en oeuvre de l'appareil. Ainsi, peut-on y trouver par exemple le message sonore d'origine 121 sous la forme d'un fichier de type sonore tel qu'un fichier MP3, le contenu verbal d'origine 111 de ce message sous la forme d'un fichier texte, les données d'apprentissage 152 relatives au message 121 pour le module de reconnaissance vocale 418, ainsi que les instructions de programme sous la forme de fichiers exécutables par le calculateur 412 pour permettre l'exécution du procédé de mesure d'intelligibilité.

Les moyens de mémoire 414, 416 sont également adaptés pour fournir à un module de sortie analogique 413, par exemple un convertisseur numérique analogique, des informations numériques propres à permettre l'élaboration d'un signal représentatif du message sonore d'origine 121.

L'appareil de mesure 41 comporte également un générateur de signaux de synchronisation 419 adapté pour coopérer avec le module de sortie analogique 413 et insérer des marqueurs de synchronisation 125 dans le message sonore d'origine 121 en des emplacements prédéfinis du contenu verbal d'origine 111. Dans ce cas, le module de reconnaissance vocale 418 est adapté pour détecter lesdits marqueurs et synchroniser le contenu verbal restitué du message sonore diffusé avec le contenu verbal d'origine.

Le module de sortie analogique 413 est à son tour relié à l'entrée analogique 403 de l'amplificateur 401 pour lui transmettre le signal représentatif du message sonore d'origine 121.

Le fonctionnement de l'appareil 41 est conforme au procédé de mesure décrit précédemment. A partir des données lues sur le CD-ROM 420 par le lecteur 414 ou des données contenues dans les moyens de mémoire interne 416, le module de sortie analogique élabore le message sonore d'origine 121, assorti le cas échéant de marqueurs de synchronisation 125, qui est transmis à l'entrée 403 de l'amplificateur 401. Ce message est alors diffusé par les haut-parleurs 402 dans l'environnement du dispositif de diffusion sonore 40, par exemple une salle de conférence. Le microphone 411 est placé au voisinage d'un ou plusieurs des haut-parleurs 402, dans une position susceptible d'être occupée par un auditeur, à l'endroit où on veut mesurer le niveau d'intelligibilité de l'ensemble. Le message sonore diffusé 131 capturé par le microphone 411 et traité par le module de capture et de numérisation 415 est transmis au module de reconnaissance vocale 418 qui en restitue le contenu verbal 151, complété le cas échéant par l'indication du rang des éléments de son contenu issue de l'interprétation des marqueurs de synchronisation 125 dans le message sonore diffusé. Ce contenu verbal 151 du message diffusé est utilisé par le calculateur 412, le cas échéant avec le contenu verbal d'origine 111 du message sonore d'origine lu sur le CD-ROM, pour calculer la mesure du niveau d'intelligibilité et l'afficher sur l'afficheur 417.

La figure 5, où des références identiques renvoient aux éléments identiques à ceux de la figure 4, représente également un appareil de mesure plus particulièrement adapté pour la mise en oeuvre du procédé de mesure selon le mode d'exécution préférentiel de celui-ci. L'appareil de mesure comprend un module d'élaboration 52 du message sonore d'origine, éventuellement détachable du corps de l'appareil, qui comporte une pluralité de sources sonores comme un microphone 521 ou un lecteur de CD-ROM 522 ou encore un module de synthèse vocale (non représenté) aptes à fournir alternativement au module de sortie analogique 413 un message sonore d'origine 121 en continu. Ce message sonore d'origine 121 est transmis d'une part au dispositif de diffusion sonore 40 et d'autre part à un second module de capture et de numérisation 515 puis à un second module de reconnaissance vocale 518. Ce second module de reconnaissance vocale 518 fournit au calculateur 412 un contenu verbal restitué 112 du message sonore d'origine 121 qui permet de traiter de manière comparative le contenu verbal restitué 151 du message sonore diffusé 131. Le résultat de la comparaison permet ainsi de calculer comme on l'a vu précédemment une mesure du niveau d'intelligibilité du dispositif de diffusion sonore 40 et de l'afficher au moyen de l'afficheur 417.

Bien entendu, cette description est donnée à titre d'exemple illustratif et l'homme du métier pourra y apporter de nombreuses modifications sans sortir de la portée de l'invention, comme par exemple remplacer le signal analogique entre l'appareil 41 et le dispositif de diffusion sonore 40 par une liaison numérique transportée, le cas échéant, par une fibre optique afin de minimiser certains problèmes de parasitage et améliorer la qualité de transmission ou encore utiliser un seul module de reconnaissance vocale en s'en servant séquentiellement plutôt qu'en utiliser deux en parallèle.

De même, l'appareil de mesure 41 peut être réalisé au moyen d'un ordinateur personnel convenablement programmé pour autant qu'il comporte des éléments tels qu'une carte son adaptée pour capturer ou émettre des messages sonores avec une qualité suffisante.

## Revendications

1. - Procédé de mesure du niveau d'intelligibilité (170) d'un dispositif de diffusion sonore (40) comportant les étapes suivantes :
- définition (110) d'un contenu verbal d'un message vocal, dit contenu verbal d'origine (111),
- élaboration (120) d'un message sonore, dit message sonore d'origine (121), à partir dudit contenu verbal d'origine,
- diffusion (130) dudit message sonore d'origine (121) par le dispositif de diffusion sonore (40),
- capture (140) en sortie du dispositif de diffusion d'un message sonore diffusé (131),
- transmission (150) dudit message sonore diffusé (131) à un module de reconnaissance vocale (418) adapté pour restituer un contenu verbal (151) du message sonore diffusé (131),
- analyse (160) du contenu verbal (151) du message sonore diffusé restitué par le module de reconnaissance vocale par comparaison de celui-ci avec le contenu verbal d'origine (111),
- calcul d'une mesure du niveau d'intelligibilité (170) du dispositif de diffusion sonore (40) à partir de cette analyse,
**caractérisé en ce que** des marqueurs de synchronisation (125) sont insérés dans le message sonore d'origine (121), en des emplacements prédéfinis du contenu verbal d'origine et **en ce que** la reconnaissance vocale est asservie en fonction de la position desdits marqueurs de synchronisation dans le message sonore diffusé (131).

2. - Procédé de mesure selon la revendication 1, **caractérisé en ce que** le message sonore d'origine (121) est un message prédéterminé et **en ce que** le module de reconnaissance vocale est adapté par adjonction de données d'apprentissage (152) relatives audit message sonore d'origine.

3. - Procédé de mesure selon l'une des revendications 1 ou 2, **caractérisé en ce que** à l'issue de l'étape d'élaboration (120), le message sonore d'origine (121) est transmis à un second module de reconnaissance vocale (518) et **en ce que** l'analyse du contenu verbal (151) du message sonore diffusé (131) restitué par le premier module de reconnaissance vocale (418) s'effectue par comparaison avec le contenu verbal (112) du message sonore d'origine (121) restitué par le second module de reconnaissance vocale (518).

4. - Procédé de mesure selon l'une des revendications 1 à 3, **caractérisé en ce que** la mesure du niveau d'intelligibilité est obtenue par une combinaison d'indicateurs pris parmi un taux de reconnaissance, un taux de substitution, un taux de suppression et un taux d'insertion, chaque indicateur étant calculé pour une durée prédéterminée du message d'origine.

5. - Procédé de mesure selon la revendication 4, **caractérisé en ce que** la durée prédéterminée correspond à une durée de message comprise entre 30 et 50 secondes.

6. - Procédé de mesure selon l'une quelconque des revendications 1 à 5, adapté pour la mise au point d'une prothèse auditive, **caractérisé en ce qu'**on utilise à titre de dispositif de diffusion sonore (40) ladite prothèse auditive en série avec un filtre présentant une courbe de réponse en fréquence identique à celle d'une oreille à appareiller et **en ce qu'**on mesure le niveau d'intelligibilité dudit dispositif.

7. - Appareil de mesure (41) du niveau d'intelligibilité d'un dispositif de diffusion sonore (40), **caractérisé en ce qu'**il comporte :
- un générateur de signaux de synchronisation (419) adapté pour insérer des marqueurs de synchronisation (125) dans un message sonore d'origine (121) en des emplacements prédéfinis d'un contenu verbal d'origine (111),
- au moins une sortie analogique (413) adaptée pour transmettre un message sonore d'origine (121) à destination du dispositif de diffusion sonore (40),
- au moins un microphone (411) associé à un module de capture et de numérisation (415), adapté pour capturer un message sonore diffusé (131) par ledit dispositif de diffusion sonore,
- au moins un module de reconnaissance vocale (418), adapté pour détecter lesdits marqueurs (125) de synchronisation, restituer un contenu verbal (151) du message sonore diffusé à partir du message sonore diffusé (131) capturé par le module de capture (415), et synchroniser le contenu verbal (151) restitué du message sonore diffusé (131) avec le contenu verbal d'origine (111),
- un module de calcul (412), adapté pour analyser ledit contenu verbal (151) et calculer une mesure du niveau d'intelligibilité du dispositif de diffusion sonore,
- un afficheur (417) adapté pour visualiser ladite mesure.

8. - Appareil de mesure (41) selon la revendication 7, **caractérisé en ce qu'**il comporte en outre un lecteur (414) de supports d'enregistrement (420) et/ou des moyens de mémoire interne (416) adaptés pour lire et enregistrer des fichiers représentatifs du message sonore d'origine, du contenu verbal dudit message et des données d'apprentissage du module de reconnaissance vocale.

9. - Appareil de mesure selon l'une des revendications 7 ou 8, **caractérisé en ce qu'**il comporte en outre un module d'élaboration (52) du message sonore d'origine coopérant avec le module de sortie analogique (413) pour transmettre un message sonore d'origine à destination du dispositif de diffusion sonore.

10. - Appareil de mesure selon la revendication 9, **caractérisé en ce que** le module d'élaboration (52) du message sonore d'origine comprend l'un au moins d'un microphone (521), d'un lecteur de supports d'enregistrement (522) ou d'un module de synthèse de la parole.

11. - Appareil de mesure selon l'une quelconque des revendications 7 à 10, **caractérisé en ce qu'**il comporte un second module de capture et de numérisation (515) ainsi qu'un second module de reconnaissance vocale (518), adaptés pour coopérer avec la sortie analogique (413) et restituer un contenu verbal restitué (112) du message sonore d'origine (121) et **en ce que** le module de calcul (412) est adapté pour comparer ledit contenu verbal restitué (112) du message sonore d'origine et un contenu verbal (151) du message sonore diffusé et calculer une mesure du niveau d'intelligibilité du dispositif de diffusion sonore à partir de ladite comparaison.

## Claims

1. Process for measuring the intelligibility-level (170) of a sound-diffusion device (40), comprising the following steps:
- definition (110) of a verbal content of a speech message, referred to as the original verbal content (111),
- processing (120) of an audio message, referred to as the original audio message (121), on the basis of said original verbal content,
- diffusion (130) of said original audio message (121) by the sound-diffusion device (40),
- capture (140) of a diffused audio message (131) at the output of the diffusion device,
- transmission (150) of said diffused audio message (131) to a speech-recognition module (418) which is suitable to reconstruct a verbal content (151) of the diffused audio message (131),
- analysis (160) of the verbal content (151) of the diffused audio message, reconstructed by the speech-recognition module, by comparison of said verbal content with the original verbal content (111),
- calculation of a measure of the intelligibility-level (170) of the sound-diffusion device (40) on the basis of this analysis,
**characterised in that** synchronisation markers (125) are inserted into the original audio message (121) at predefined locations of the original verbal content, and **in that** the speech recognition is controlled as a function of the position of said synchronisation markers in the diffused audio message (131).

2. Measuring process according to Claim 1, **characterised in that** the original audio message (121) is a predetermined message, and **in that** the speech-recognition module is adapted by addition of learning data (152) relating to said original audio message.

3. Measuring process according to one of Claims 1 or 2, **characterised in that** at the conclusion of the processing step (120) the original audio message (121) is transmitted to a second speech-recognition module (518), and **in that** the analysis of the verbal content (151) of the diffused audio message (131), reconstructed by the first speech-recognition module (418), is effected by comparison with the verbal content (112) of the original audio message (121), reconstructed by the second speech-recognition module (518).

4. Measuring process according to one of Claims 1 to 3, **characterised in that** the measure of the intelligibility-level is obtained by a combination of indicators taken from a recognition-rate, a substitution-rate, a deletion-rate and an insertion-rate, each indicator being calculated for a predetermined duration of the original message.

5. Measuring process according to Claim 4, **characterised in that** the predetermined duration corresponds to a message duration of between 30 seconds and 50 seconds.

6. Measuring process according to any one of Claims 1 to 5, suitable for tuning a hearing-aid, **characterised in that** said hearing-aid is used by way of sound-diffusion device (40) in series with a filter exhibiting a frequency-response curve identical to that of an ear to be fitted with an aid, and **in that** the intelligibility-level of said device is measured.

7. Apparatus (41) for measuring the intelligibility-level of a sound-diffusion device (40), **characterised in that** it comprises:
- a synchronisation-signal generator (419) which is suitable to insert synchronisation markers (125) into an original audio message (121) at predefined locations of an original verbal content (111),
- at least one analogue output (413) which is suitable to transmit an original audio message (121) to the sound-diffusion device (40),
- at least one microphone (411) linked with a capture-and-digitisation module (415) and suitable to capture an audio message (131) diffused by said sound-diffusion device,
- at least one speech-recognition module (418) which is suitable to detect said synchronisation markers (125), to reconstruct a verbal content (151) of the diffused audio message on the basis of the diffused audio message (131) captured by the capture module (415), and to synchronise the reconstructed verbal content (151) of the diffused audio message (131) with the original verbal content (111),
- a calculation module (412) which is suitable to analyse said verbal content (151) and to calculate a measure of the intelligibility-level of the sound-diffusion device,
- a display (417) which is suitable to display said measure.

8. Measuring apparatus (41) according to Claim 7, **characterised in that** it includes, in addition, a reader (414) of recording media (420) and/or internal-memory means (416) which are suitable to read and record files that are representative of the original audio message, of the verbal content of said message and of the learning data of the speech-recognition module.

9. Measuring apparatus according to one of Claims 7 or 8, **characterised in that** it includes, in addition, a module (52) for processing the original audio message, cooperating with the analogue-output module (413) in order to transmit an original audio message to the sound-diffusion device.

10. Measuring apparatus according to Claim 9, **characterised in that** the module (52) for processing the original audio message includes at least one of a microphone (521), a recording-medium reader (522) or a speech-synthesis module.

11. Measuring apparatus according to any one of Claims 7 to 10, **characterised in that** it includes a second capture-and-digitisation module (515) as well as a second speech-recognition module (518), which are suitable to co-operate with the analogue output (413) and to reconstruct a reconstructed verbal content (112) of the original audio message (121), and **in that** the calculation module (412) is suitable to compare said reconstructed verbal content (112) of the original audio message and a verbal content (151) of the diffused audio message and to calculate a measure of the intelligibility-level of the sound-diffusion device on the basis of said comparison.

## Patentansprüche

1. Verfahren zur Messung der Verständlichkeitsebene (170) einer Vorrichtung zur Schallausstrahlung (40), das folgende Schritte umfasst:
- Definition (110) eines verbalen Inhalts einer Sprachmeldung, des sogenannten ursprünglichen verbalen Inhalts (111),
- Erarbeitung (120) einer Schallmeldung, der sogenannten ursprünglichen Schallmeldung (121) ausgehend vom besagten ursprünglichen verbalen Inhalt,
- Ausstrahlung (130) der besagten ursprünglichen Schallmeldung (121) durch die Vorrichtung zur Schallausstrahlung (40),
- Erfassung (140) am Ausgang der Vorrichtung zur Ausstrahlung einer ausgestrahlten Schallmeldung (131),
- Übermittlung (150) der besagten ausgestrahlten Schallmeldung (131) an ein Spracherkennungsmodul (418), das geeignet ist, einen verbalen Inhalt (151) der ausgestrahlten Schallmeldung (131) wiederzugeben,
- Auswertung (160) des verbalen Inhalts (151) der vom Spracherkennungsmodul wiedergegebenen ausgestrahlten Schallmeldung durch deren Vergleich mit dem ursprünglichen verbalen Inhalt (111),
- Berechnung einer Messung der Verständlichkeitsebene (170) der Vorrichtung zur Schallausstrahlung (40) ausgehend von dieser Auswertung,
**dadurch gekennzeichnet, dass** Marker zur Synchronisation (125) in die ursprüngliche Schallmeldung (121) an vordefinierten Stellen des ursprünglichen verbalen Inhalts eingefügt werden, und **dadurch**, dass die Spracherkennung je nach der Position der besagten Marker zur Synchronisation in der ausgestrahlten Schallmeldung (131) geregelt wird.

2. Verfahren zur Messung nach Anspruch 1, **dadurch gekennzeichnet, dass** die ursprüngliche Schallmeldung (121) eine vorbestimmte Meldung ist, und **dadurch**, dass das Spracherkennungsmodul durch Hinzufügung von Lerndaten (152) bezüglich der besagten ursprünglichen Schallmeldung angepasst wird.

3. Verfahren zur Messung nach einem beliebigen der vorstehenden Ansprüche 1 oder 2, **dadurch gekennzeichnet, dass** nach dem Erarbeitungsschritt (120) die ursprüngliche Schallmeldung (121) an ein zweites Spracherkennungsmodul (518) übermittelt wird, und **dadurch**, dass die Auswertung des verbalen Inhalts (151) der ausgestrahlten und vom ersten Spracherkennungsmodul (418) wiedergegebenen Schallmeldung (131) durch Vergleich mit dem verbalen Inhalt (112) der ursprünglichen Schallmeldung (121) erfolgt, die vom zweiten Spracherkennungsmodul (518) wiedergegeben wird.

4. Verfahren zur Messung nach einem beliebigen der vorstehenden Ansprüche 1 bis 3, **dadurch gekennzeichnet, dass** die Messung der Verständlichkeitsebene durch eine Kombination von Indikatoren erzielt wird, die unter einer Erkennungsrate, einer Substitutionsrate, einer Unterdrückungsrate und einer Einfügungsrate genommen werden, wobei jeder Indikator für eine vorbestimmte Dauer der ursprünglichen Meldung berechnet ist.

5. Verfahren zur Messung nach Anspruch 4, **dadurch gekennzeichnet, dass** die vorbestimmte Dauer einer Meldungsdauer von zwischen 30 und 50 Sekunden entspricht.

6. Verfahren zur Messung nach einem beliebigen der vorstehenden Ansprüche 1 bis 5, das für die Erstellung einer Hörhilfe geeignet ist, **dadurch gekennzeichnet, dass** als Vorrichtung zur Schallausstrahlung (40) die besagte Hörhilfe in Reihe mit einem Filter benutzt wird, das eine Frequenzgangkurve aufweist, die identisch mit derjenigen eines auszurüstenden Ohres ist, und **dadurch**, dass die Verständlichkeitsebene der besagten Vorrichtung gemessen wird.

7. Gerät zur Messung (41) der Verständlichkeitsebene einer Vorrichtung zur Schallausstrahlung (40), **dadurch gekennzeichnet, dass** es folgende Teile umfasst:
- einen Synchronisationssignalgenerator (419), der geeignet ist, Marker zur Synchronisation (125) in eine ursprüngliche Schallmeldung (121) an vordefinierten Stellen eines ursprünglichen verbalen Inhalts (111) zu setzen,
- zumindest einen analogen Ausgang (413), der geeignet ist, eine ursprüngliche Schallmeldung (121) an die Vorrichtung zur Schallausstrahlung (40) zu übermitteln,
- zumindest ein Mikrophon (411) in Verbindung mit einem Modul zur Erfassung und Digitalisierung (415), das geeignet ist, eine Schallmeldung zu erfassen (131), die von der besagten Vorrichtung zur Schallausstrahlung ausgestrahlt wird,
- zumindest ein Spracherkennungsmodul (418), das geeignet ist, die besagten Marker (125) zur Synchronisation zu entdecken, einen verbalen Inhalt (151) der ausgestrahlten Schallmeldung ausgehend von der ausgestrahlten Schallmeldung (131) wiederzugeben, die vom Erfassungsmodul (415) erfasst wird, und den wiedergegebenen verbalen Inhalt (151) der ausgestrahlten Schallmeldung (131) mit dem verbalen Inhalt des ursprünglichen verbalen Inhalts (111) zu synchronisieren,
- ein Berechnungsmodul (412), das geeignet ist, den besagten verbalen Inhalt (151) auszuwerten und eine Messung der Verständlichkeitsebene der Vorrichtung zur Schallausstrahlung zu berechnen,
- eine Anzeige (417), die geeignet ist, die besagte Messung anzuzeigen.

8. Gerät zur Messung (41) nach Anspruch 7, **dadurch gekennzeichnet, dass** es ferner ein Laufwerk (414) für Aufzeichnungsträger (420) und/oder Mittel eines internen Speichers (416) umfasst, die geeignet sind, repräsentative Dateien der ursprünglichen Schallmeldung, des verbalen Inhalts der besagten Meldung und der Lerndaten des Spracherkennungsmoduls zu lesen und aufzuzeichnen.

9. Gerät zur Messung nach einem beliebigen der vorstehenden Ansprüche 7 oder 8, **dadurch gekennzeichnet, dass** es ferner ein Modul zur Erarbeitung (52) der ursprünglichen Schallmeldung umfasst, das mit dem analogen Ausgangsmodul (413) zusammenarbeitet, um eine ursprüngliche Schallmeldung an die Vorrichtung zur Schallausstrahlung zu übermitteln.

10. Gerät zur Messung nach Anspruch 9, **dadurch gekennzeichnet, dass** das Modul zur Erarbeitung (52) der ursprünglichen Schallmeldung entweder ein Mikrophon (521) oder ein Laufwerk für Aufzeichnungsträger (522) oder ein Modul für Sprachsynthese umfasst.

11. Gerät zur Messung nach einem beliebigen der vorstehenden Ansprüche 7 bis 10, **dadurch gekennzeichnet, dass** es ein zweites Modul zur Erfassung und Digitalisierung (515) sowie ein zweites Spracherkennungsmodul (518) umfasst, die geeignet sind, mit dem analogen Ausgang (413) zusammenzuarbeiten und einen verbalen Inhalt wiederzugeben (112), der aus der ursprünglichen Schallmeldung (121) wiedergegeben wurde, und **dadurch**, dass das Berechnungsmodul (412) geeignet ist, den besagten wiedergegebenen verbalen Inhalt (112) der ursprünglichen Schallmeldung und einen verbalen Inhalt (151) der ausgestrahlten Schallmeldung zu vergleichen und ausgehend von besagtem Vergleich einen Messwert der Verständlichkeitsebene der Vorrichtung zur Schallausstrahlung zu berechnen.
